# EUROPEAN PATENT APPLICATION

(11) **EP 0 995 591 A1**
(43) Date of publication of application: **26.04.2000**
(21) Application number: 99120702.8
(22) Date of filing: 19.10.1999
(51) Int. Cl.: B32B 27/32, C08K 9/04

(54) **Adhesive resin-silicate composite and multi-layer product thereof**

(30) Priority: 21.10.1998 JP 29947098
(71) Applicant: SHOWA DENKO KABUSHIKI KAISHA, Minato-ku, Tokyo (JP)
(72) Inventor: Tamura, Kenji, c/o Showa Denko K.K., Kawasaki-shi, Kanagawa-ken (JP); Kageyama, Yohei c/o Showa Denko K.K., Kawasaki-shi, Kanagawa-ken (JP); Motegi, Yoshihiro, c/o Japan Polyolefins Co., Kawasaki-shi, Kanagawa-ken (JP)
(74) Representative: Strehl Schübel-Hopf & Partner

(57) **Abstract**

The present invention relates to an adhesive resin composite comprising from 0.1 to 20 parts by weight of a organophilic layered silicate per 100 parts by weight of a functional group-containing modified polyolefin; and multilayer product comprising at least three layers of a polyolefin-type resin layer, the adhesive resin layer composite and a barrier resin layer. The adhesive resin and the multilayer product are useful in various fields including containers and packing materials required to have chemical resistance, gas barrier property and liquid barrier property, such as gasoline tank.

## Description

### Background of the Invention

### Field of the Invention

The present invention relates to an adhesive resin and a multilayer product thereof useful in the field of containers, packing materials and gasoline tanks required to have gas barrier property, liquid barrier property and resistance to chemicals.

### Description of Background Art

Polyolefin is an inexpensive resin easy to work and excellent in the mechanical property, thermal property, chemical property and electrical property, accordingly, it is widely produced in industry and used in various fields. However, the polyolefin is deficient in the gas barrier property and liquid barrier property. In order to impart the barrier property, it is necessary to laminate the polyolefin sheet with a barrier resin layer having excellent barrier property using an adhesive layer.

As a synthetic resin having excellent gas or liquid barrier property, polyvinyl alcohol, ethylene-vinyl alcohol copolymer, polyamide and the like are generally used, however, these resins cannot have barrier property as high as that of metal film such as aluminum foil.

Therefore, various methods for improving the barrier property have been developed. In recent years, a polyamide film comprising polyamide having uniformly dispersed therein layered silicate having a later-to-layer distance of 100 Å or more (see, JP-B-2-29458 (the term "JP-B" as used herein means an "examined Japanese patent publication)), a formed article such as film or sheet, comprising aromatic polyamide having dispersed therein layered silicate (see, JP-A-8-319417 (the term "JP-A" as used herein means an "published Japanese unexamined patent application)) and the like have been proposed. In order to obtain a barrier layer having uniformly dispersed therein layered silicate, the layered silicate must be delaminated and uniformly dispersed. Furthermore, the resin as a matrix is limited, accordingly, uses are also limited.

In recent years, demands for film or sheet having barrier property are increasing and such film or sheet is used in various fields including food package. To cope with this trend, studies are made on a combination of various barrier resins with polyolefin. The multilayer sheet obtained has at the same time liking for reduction in the thickness. In usual, for bringing out high barrier property, a method of increasing the thickness of the barrier resin layer is used, but this method has a problem such that the multilayer sheet is thickened and the cost increases.

For dispersing the layer compound in the barrier resin even to the molecular level, affinity of the barrier resin for the layer compound must be increased. For attaining this, respective peculiar polymerization techniques and modification techniques are necessary for respective kinds of barrier resin. Depending on the case, the barrier property inherent in the resin may be impaired by such techniques.

### Summary of the Invention

The object of the present invention is to solve the above-described problems and obtain multilayer product which enables thinning of film or sheet while maintaining the high barrier property.

The present inventors have found that by finely dispersing a layered silicate in an adhesive resin used for the adhesion between polyolefin and barrier resin, the barrier property can be more improved. The present invention has been accomplished based on this finding.

More specifically, the present invention provides an adhesive resin-silicate composite comprising from 0.1 to 20 parts by weight of a organophilic layered silicate per 100 parts by weight of a functional group-containing modified polyolefin.

Furthermore, the present invention provides multilayer product comprising at least three layers consisting of a polyolefin-type resin layer, an adhesive resin composite layer containing from 0.1 to 20 parts by weight of an organophilic layered silicate per 100 parts by weight of a functional group-containing modified polyolefin, and a barrier resin layer.

The adhesive resin composite of the present invention has excellent barrier property and good adhesive property with other resins, therefore, is useful in various fields including containers and packing materials required to have chemical resistance, gas barrier property and liquid barrier property, such as gasoline tank.

### Detailed Description of the Invention

The functional group-containing modified polyolefin resin (hereinafter referred to as "modified polyolefin resin") for use in the present invention includes a resin obtained by treating a polyolefin-type resin described later with an organic peroxide or irradiating it with a radioactive ray such as X ray, electron beam and gamma ray, to generate a radical, and graft-reacting the radical with a functional group-containing unsaturated compound. Examples of the functional group include an isocyanate group, a hydroxyl group, a carboxyl group, an epoxy group, an amido group and an acid anhydride group.

Specific examples of the isocyanate group-containing unsaturated compound include (meth)acryloyl isocyanate, croyl isocyanate, crotonic acid isocyanate ethyl ester, crotonic acid isocyanate butyl ester, (meth)acrylic acid isocyanate ethyl ester, (meth)acrylic acid isocyanate butyl ester, (meth)acrylic acid isocyanate hexyl ester, (meth)acrylic acid isocyanate octyl ester, (meth)acrylic acid isocyanate lauryl ester and (meth)acrylic acid isocyanate hexadecyl ester.

Specific examples of the carboxyl group-containing unsaturated compound include acrylic acid, methacrylic acid, maleic acid, fumaric acid, itaconic acid, citraconic acid, and unsaturated carboxylic acids such as endobicyclo[2,2,2]-1,4,5,6,7,7-hexachloro-5-heptene-2,3-dicarboxylic acid, endo-bicyclo[2,2,1]-5-heptene-2,3-dicarboxylic acid, cis-4-cyclohexene-1,2-dicarboxylic acid, crotonic aid, isocrotonic acid, angelic acid and sorbic acid.

Specific examples of the hydroxyl group-containing unsaturated compound include 2-hydroxyethyl acrylate, 2-hydroxyethyl methacrylate, 3-hydroxypropyl acrylate, 2-hydroxypropyl methacrylate, 2,3,4,5-tetrahydroxypentyl acrylate, 3-hydroxy-1-propene, 4-hydroxy-2-butene, trans-4-hydroxy-2-butene and 3-hydroxy-2-methyl-1-propene.

Specific examples of the epoxy group-containing unsaturated compound include glycidyl acrylate, glycidyl methacrylate, itaconic acid glycidyl ester, butenetricarboxylic acid monoglycidyl ester, butenetricarboxylic acid diglycidyl ester, butenetricarboxylic acid triglycidyl ester, acryl glycidyl ether, 2-methylacryl glycidyl ether, 3,4-epoxybutene, 3,4-epoxy-3-methyl-1-butene, 3,4-epoxy-3-methyl-1-pentene and vinylcyclohexenone monoxide.

Specific examples of the amido group-containing unsaturated compound include allylamine, aminoethyl methacrylate, aminopropyl methacrylate, dimethylaminoethyl methacrylate, acrylamide, methacrylamide, maleic acid monoamide, maleic acid diamide, maleic acid-N-monoethylamide, maleic acid-N,N-diethylamide, fumaric acid monoamide and fumaric acid diamide.

Specific examples of the acid anhydride group-containing unsaturated compound include maleic acid anhydride, itaconic acid anhydride, phthalic acid anhydride, citraconic acid anhydride, endo-bicyclo[2,2,1]-1,4,5,6,7,7-hexachloro-5-heptene-2,3-dicarboxylic acid anhydride, endo-bicyclo[2,2,1]-5-heptene-2,3-dicarboxylic acid anhydride and cis-4-cyclohexene-1,2-dicarboxylic acid anhydride.

The modified polyolefin resin for use in the present invention is generally obtained by a melting method using an organic peroxide. More specifically, according to the melting method, a functional group-containing unsaturated compound and an organic peroxide are added to a polyolefin-type resin which will be described later, and these are previously dry blended and then melt-kneaded. The organic peroxide used preferably has a half-value period in 1 minute of from 100 to 280°C, more preferably from 120 to 230°C. Suitable examples of the organic peroxide include t-butylperoxybenzoate, 2,5-di(t-butylperoxy)hexane and di-t-butylperoxide. These organic peroxides may be used either individually or in combination of two or more thereof.

The layered silicate for use in the present invention is abundant in the variations of chemical composition, crystal structure and the like, and the classification and nomenclature thereof are not yet established. The layered silicate as used herein is characterized by the layer crystal and mineralogically belongs to phyllosilicate. The phyllosilicate includes a 2:1 type phyllosilicate comprising two tetrahedral layers and one octahedral layer, and a 1:1 type phyllosilicate comprising one tetrahedral layer and one octahedral layer. Representative examples of the 2:1 type phyllosilicate mineral include smectite, vermiculite, mica and chlorites. Representative examples of the 1:1 type phyllosilicate include kaolin and serpentine. The group of smectite includes saponite, hectorite, sauconite, montomorillonite, beidellite, nontronite and stevnsite. The group of vermiculite include trioctahedral vermiculite and dioctahedral vermiculite. The group of mica include phlogopite, paragonite, chlorite, margarite, taeniolite and tetrasilicic mica. These phyllosilicates may be either a natural product or a synthetic product obtained by the hydrothermal method, melting method or solid phase method.

The organophilic layered silicate for use in the present invention is obtained by previously lipophilizing the above-described layered silicate.

In general, the layered silicate is known to form an intercalated compound by the intercalation of ion, molecule or cluster between layers. For example, when the exchangeable metal cation of a hydrophilic layered silicate is ion exchanged with an organic cation, an intercalated compound controlled in the layer-to-layer distance can be obtained. By controlling the compatibility of the organic cation between layers with the resin material as a matrix in the intercalated compound obtained, the layered silicate can be finely dispersed. The layered silicate may also be lipophilized by the interlayer polymerization of a hydrophilic organic monomer in an aqueous solution or by the mixing with a hydrophilic polymer.

The kind of the organic cation used for lipophilizing the layered silicate is not particularly limited, but a positive charge organic compound or the like is preferably used, such as primary amine, secondary amine, tertiary amine, chloride of these amines, quaternary ammonium salt, amine compound, amino acid derivative, nitrogen-containing heterocyclic compound and phosphonium salt. Specific examples of the primary amine include octylamine, laurylamine, tetradecylamine, hexadecylamine, stearylamine, oleylamine, acrylamine, benzylamine and aniline. Specific examples of the secondary amine include dilaurylamine, ditetradecylamine, dihexadecylamine, distearylamine and N-methylaniline. Specific examples of the tertiary amine include dimethyloctylamine, dimethyldecylamine, dimethyllaurylamine, dimethylmyristylamine, dimethylpalmitylamine, dimethylstearylamine, dilaurylmonomethylamine, tributylamine, trioctylamine and N,N-dimethylaniline and their salt. Specific examples of the quaternary ammonium include tetrabutylammonium ion, tetrahexylammonium ion, dihexyldimethylammonium ion, dioctyldimethylammonium ion, hexatrimethylammonium ion, octatrimethylammonium ion, dodecyltrimethylammonium ion, hexadecyltrimethylammonium ion, stearyltrimethylammonium ion, dococenyltrimethylammonium ion, cetyltrimethylammonium ion, cetyltriethylammonium ion, hexadecylammonium ion, tetradecyldimethylbenzylammonium ion, distearyldimethylammonium ion, stearyldimethylbenzylammonium ion, dioleyldimethylammonium ion, N-methyldiethanollaurylammonium ion, dipropanolmonomethyllaurylammonium ion, dimethylmonoethanollaurylammonium ion, polyoxyethylenedodecylmonomethylammonium ion and alkylaminopropylamine quaternized product.

Specific examples include amino acid derivatives such as leucine, cysteine, phenylalanine, tyrosine, aspartic acid, glutamic acid, lysine, 6-aminohexylcarboxylic acid, 12-aminolaurylcarboxylic acid, N-n-dimethyl-6-aminohexylcarboxylic acid, N-n-dodecyl-N,N-dimethyl10-aminodecylcarboxylic acid and dimethyl-N-12-aminolaurylcarboxylic acid, proline, γ-lactam, histidine, tryptophan and their salts.

Specific examples of the nitrogen-containing heterocyclic compound includes pyridine, pyrrol, imidazole, pyrimidin, 1,3,5-triazine, melamine, indole, purine, and their derivatives (including their salts).

In the present invention, the amount of the organophulic layered silicate blended is from 0.1 to 20 parts by weight, preferably from 1 to 15 parts by weight, more preferably from 2 to 10 parts by weight, per 100 parts by weight of the modified polyolefin. If the amount of the organophilic layered silicate blended is less than 0.1 part by weight, a sufficiently high barrier property is difficult to bring out, whereas if it exceeds 20 parts by weight, the adhesive property is disadvantageous inhibited.

In the present invention, for improving the barrier property, the organophilic layered silicate preferably has an aspect ratio as an index for showing the dispersion state of the organophilic layered silicate, of 50 or more, more preferably 100 or more.

The adhesive resin composite of the present invention is obtained by compounding the above-described modified polyolefin and the layered silicate. The method for compounding these is not particularly limited, however, a method of performing the compounding by adding organophilic layered silicate in the process of graft-modifying the polyolefin, or a method of performing the compounding by melt-mixing the modified polyolefin and the layered silicate, may be used. The melt-kneading method preferably uses a single-screw extruder, a twin-screw extruder or a kneader such as Brabender, kneader or Banbury mixer.

Examples of the polyolefin-type resin for use in the present invention include homopolymers of ethylene, homopolymers of propylene, homopolymers of butylene, copolymers of ethylene and another α-olefin, and copolymers of propylene and another α-olefin. The polyolefin-type resin suitably has a molecular weight of generally from 10,000 to 100,000, preferably from 20,000 to 500,000, more preferably from 50,000 to 300,000.

The polyolefin-type resin may be obtained by homopolymerizing or copolymerizing an olefin using a catalyst system obtained from a transition metal compound and an organic aluminum compound (Ziegler catalyst), using a catalyst system obtained by mounting a chromium compound (e.g., chromium oxide) on a carrier (e.g., silica) (Phillips catalyst), or using a radical initiator (e.g., organic peroxide).

The polyolefin-type resin for use in the present invention may contain, if desired, various additives commonly used in this technical field, such as antioxidant, slipping agent, UV absorbent and filler.

The shape of the polyolefin-type resin may be either powder or pellet, however, powder form is preferred for the modified polyolefin because the dispersibility and modification efficiency can be increased.

Examples of the barrier resin for use in the present invention include polyester resin such as polyethylene terephthalate, polybutylene terephthalate and polyethylene naphthalate, polyamide resins and copolymers thereof such as polyamide 6, polyamide 66, polyamide 610, polyamide 7, polyamide 11, polyamide 12 and aromatic polyamide, ether-amide copolymers, polyvinyl alcohol, ethylene-vinyl alcohol copolymers, polyvinylidene chloride, polyvinylidene fluoride and acrylonitrile copolymers. Also, hybrid materials resulting from uniformly dispersing layered silicate in the resin described above, or the above-descried resins on which surface a metal or a metal oxide is deposited may also be used. In the case of a hybrid material, the content of the layered silicate is preferably from 0.5 to 20 wt%, more preferably from 2 to 10 wt%.

The multilayer product of the present invention comprises at least three layers of a polyolefin-type resin (A), an adhesive resin composite (B) and a barrier resin (C). In addition to these three layers, the same resin as the resin used in the multilayer product of the present invention or another resin may be laminated to form multilayer product comprising three or more layers, for example, five layers of (A)/(B)/(C)/(B)/(A).

The burr generated at the production of various molded articles may be reused or the molded article may be recycled, by blending it with the polyolefin-type resin (A). The ratio of the recycling material blended varies depending on the molding method, however, it is preferably less than 60 wt%, more preferably less than 40 wt%. A recycling material layer may be newly provided to form a multilayer product, for example, 6 layers using 4 kinds of materials such as (A)/(recycling material)/(B)/(C)/(B)/(A).

With respect to the thickness of each resin layer constituting the multilayer product, the thickness of layer (B) is sufficient if a sufficiently high adhesive strength can be maintained, and in general, it is suitably from 0.001 to 0.1 mm. The thicknesses of layers (A) and (C) are not particularly limited and an appropriate thickness range may be selected according to the use end. However, in the case of an ordinary film or container, the thickness of layer (A) is suitably from 0.01 to 3 mm and the thickness of layer (C) is suitably from 0.01 to 0.1 mm. In the case of a large blow container such as gasoline tank, the thickness of layer (A) is suitably from 0.5 to 10 mm and the thickness of layer (C) is suitably from 0.5 to 5 mm.

For the production of multilayer product of the present invention, a molding method practically used in the field of general synthesis resin may be used, such as press molding, hollow molding, film molding, sheet molding and stamping molding. Representative examples of the molding method include a method of co-extruding respective resins from T-die (multi-sheet molding), a method of co-extruding respective resins, then extruding them in the form of a cylinder from a circle die and taking it up by a pinch roll while cooling (multi-layer inflation molding), a method of co-extruding respective resins and producing a container by hollow formation (multi-layer hollow molding), and a method of forming respective thin materials (sheet or film) and then contact-bonding these thin materials to produce multilayer product.

The multilayer product of the present invention is formed into a container or the like through secondary molding such as vacuum molding, air-pressure molding or press molding.

### Examples

The present invention is described in greater detail below by referring to the Examples.

The melt flow rate (MFR) was measured at a temperature of 190°C under a load of 2.16 kg according to JIS K6760. The oxygen permeability was measured at a temperature of 23°C and a relative humidity of 0% RH or 100% RH using an oxygen permeability measuring apparatus (Model MOCON 0X-TRAN100A, manufactured by Modern Control) according to ASTM D-3985-81. The peel strength was measured according to JIS K1707.

With respect to the gasoline barrier property, the amount of gasoline permeated per day was measured at a temperature of 40°C according to European Fuel Tank Standard (ECE) 34. The gasoline used was a mixture of gasoline and ethanol (90 vol./10 vol.)

The functional group-containing modified polyolefin used were maleic acid anhydride-modified low density polyethylene (ADOTEX ER510E, produced by Japan Polyolefins) (hereinafter referred to as "MPO1"), ethylene-glycidyl methacrylic acid copolymer (BONDFAST 2B, produced by Sumitomo Chemical Co., Ltd.) (hereinafter referred to as "MPO2") and methacrylic acid isocyanate ethyl ester-modified polyethylene (hereinafter referred to as "MPO3") obtained by the method described below.

Using a Henschel mixer, 1.5 parts by weight of methacrylic acid isocyanate ethyl ester and 0.15 parts by weight of 2,5-dimethyl-2,5-di(t-butylperoxy)hexane were previously mixed per 100 parts by weight of linear low-density polyethylene (MFR: 12.0 g/10 min, density: 0.941 g/cm³). The mixture obtained was graft-modified by melt-kneading it at a resin temperature of 180°C using a 40 mmφ single-screw extruder. The modified polyethylene obtained had an MFR of 3.0 g/10 min and a grafting ratio of 0.2 mol%.

The layered silicate used was a organophilic layered silicate prepared as follows.

200 g of tetrasilicic mica (SOMASIF ME100 produced by COOP Chemical) having an ion exchange capacity (CED) of 107 meq/100 g was suspended in 4,000 ml of distilled water and thoroughly swelled. The suspension was adjusted to 60°C and thereto, dodecylmonomethylethanolammonium chloride (ESOGUARD C/12, produced by Lion Akzo) was added in an amount of 1.5 equivalent to CEC. The mixture was thoroughly stirred and subjected to ion exchange reaction. The resulting precipitate was filtered. The filtrate was repeatedly washed and filtered to remove free ammonium ion and then washed and pulverized to obtain organophilic layered silicate.

The polyolefin-type resin used were linear low-density polyethylene (J-REX LL:A620F, produced by Japan Polyolefins) (hereinafter referred to as "LL") and high-density polyethylene (J-REX HD:KBX44A, produced by Japan Polyolefins) (hereinafter referred to as "HD"). The barrier resin used were ethylene-vinyl alcohol copolymer (EVAL EP-F101, produced by Kuraray) (hereinafter referred to as "EVOH") and polyamide 6 (NOVAMID 1030CA, produced by Mitsubishi Engineering Plastics) (hereinafter referred to as "PA").

The adhesive resin composite of the present invention was obtained by melt-kneading modified polyolefin and organophilic layered silicate at a ratio shown below using a twin-screw extruder under the condition of 180°C.

In SGPE-6, talc (MICRON WHITE#5000SA, produced by Hayashi Kasei) was used in place of the organophilic layered silicate.

| | Kind | Modified Polyolefin Resin Amount Blended (parts by weight) | Organophilic Layered silicate Amount Blended (parts by weight) |
|---|---|---|---|
| SGPE-1 | MPO1 | 97 | 3 |
| SGPE-2 | MPO1 | 93 | 7 |
| SGPE-3 | MPO2 | 97 | 3 |
| SGPE-4 (Comparison) | MPO3 | 97 | 3 |
| SGPE-5 | MPO1 | 70 | 30 |
| SGPE-6 | MPO1 | 97 | 3 (Talc) |

Mixtures of barrier resin and organophilic layered silicate were obtained in the same manner as above by blending organophilic layered silicate at a ratio of 3 wt% under the condition of 200°C. The mixtures obtained were designated as EVOH mixture and PA mixture, respectively.

### Examples 1 to 7 and Comparative Examples 1 to 4:

Pellets of polyolefin-type resin, adhesive resin composite and barrier resin (or a mixture of the resins) were co-extruded into film through T-die at a temperature of 240°C using 50 mmφ, 32 mmφ and 26 mmφ extruders, respectively. The films were solidified on a roll at a temperature of 80°C to obtain multilayer products film comprising three kinds of materials and five layers. The layers of polyolefin layer/adhesive layer/barrier layer/adhesive layer/polyolefin layer had a thickness of 5/3/10/3/15 (µm), respectively. The evaluation results of each multilayer film are shown in Table 1.

### Examples 8 to 11 and Comparative Examples 5 and 6:

Containers each comprising three kinds of materials and five layers and having a thickness of 6.2 mm and a content volume of 40 L were manufactured using HD as a polyolefin-type resin and using each resin shown in Table 2 through an accumulator-type blow molding machine (NB-30G, manufactured by The Japan Steel Works). Respective layers had a thickness of 2.9/0.3/0.1/0.2/2.7 (mm) from the inner layer side.

The containers obtained were evaluated on the gasoline barrier property. The results obtained are shown in Table 2.

**Table 1**

| | Polyolefin-Type Resin | Adhesive Composite | Barrier Resin | Oxygen Permeability (ml/m²·24 hr) | | Peel Strength (g/15 mm) |
|---|---|---|---|---|---|---|
| | | | | 0% RH | 100% RH | |
| Example 1 | LL | SGPE-1 | EVOH | 4.98 | 40.3 | 920 |
| Example 2 | LL | SGPE-1 | EVOH mixture | 3.73 | 30.7 | 930 |
| Example 3 | LL | SGPE-2 | EVOH | 5.06 | 42.3 | 980 |
| Example 4 | LL | SGPE-3 | EVOH | 5.98 | 44.8 | 1100 |
| Example 5 | LL | SGPE-4 | EVOH | 5.31 | 39.7 | 1050 |
| Comparative Example 1 | LL | SGPE-5 | EVOH | 4.88 | 38.0 | 670 |
| Comparative Example 2 | LL | SGPE-6 | EVOH | 8.30 | 64.0 | 900 |
| Example 6 | LL | SGPE-1 | PA | 8.25 | 19.4 | 1220 |
| Example 7 | LL | SGPE-1 | PA mixture | 6.80 | 15.5 | 1050 |
| Comparative Example 3 | LL | SGPE-5 | PA | 7.20 | 15.1 | 870 |
| Comparative Example 4 | LL | SGPE-6 | PA | 15.00 | 35.2 | 1100 |

**Table 2**

| | Polyolefin-Type Resin | Adhesive Composite | Barrier Resin | Gasoline Barrier Property (g/d) |
|---|---|---|---|---|
| Example 8 | HD | SGPE-1 | EVOH | 0.06 |
| Example 9 | HD | SGPE-1 | EVOH mixture | 0.02 |
| Example 10 | HD | SGPE-1 | PA | 0.08 |
| Example 11 | HD | SGPE-1 | PA mixture | 0.03 |
| Comparative Example 5 | HD | SGPE-6 | EVOH | 0.2 |
| Comparative example 6 | HD | SGPE-6 | PA | 0.3 |

## Claims

1. An adhesive resin-silicate composite comprising from 0.1 to 20 parts by weight of a organophilic layered silicate per 100 parts by weight of a functional group-containing modified polyolefin.

2. The adhesive resin composite as claimed in claim 1, wherein the organophilic layered silicate is dispersed in the adhesive resin composition at an aspect ratio of 50 or more.

3. The adhesive resin composite as claimed 1 or 2, wherein the functional group in the modified polyolefin is at least one group selected from the group consisting of an isocyanate group, a hydroxyl group, a carboxyl group, an epoxy group, an amido group and an acid anhydride group.

4. A multilayer product comprising at least three layers consisting of a polyolefin-type resin layer, an adhesive resin composite layer containing from 0.1 to 20 parts by weight of the organophilic layered silicate per 100 parts by weight of a functional group-containing modified polyolefin, and a barrier resin layer.
